# EUROPEAN PATENT APPLICATION

(11) **EP 4 371 661 A1**
(43) Date of publication of application: **22.05.2024**
(21) Application number: 22918885.9
(22) Date of filing: 26.12.2022
(51) Int. Cl.: B01J 19/18, B01F 25/72, B01F 27/96

(54) **LIQUID SPRINKLING DEVICE AND LIQUID SPRINKLING APPARATUS USING SAME**

(30) Priority: 05.01.2022 JP 2022000773
(71) Applicant: Kansai Chemical Engineering Co., Ltd., Amagasaki-shi, Hyogo 660-0053 (JP); Bio-energy Corporation, Amagasaki-shi, Hyogo 660-0053 (JP)
(72) Inventor: NODA, Hideo, Amagasaki-shi, Hyogo 660-0053 (JP); HAMA, Shinji, Amagasaki-shi, Hyogo 660-0053 (JP)
(74) Representative: Clements, Andrew Russell Niel
(86) International application number: PCT/JP2022/048033
(87) International publication number: WO 2023/132302

(57) **Abstract**

A liquid dispersion device according to the present invention includes at least one liquid flow member attachable to a rotary shaft. The liquid flow member includes at least one tubular suction portion extending along the rotary shaft and including a suction port at a lower end thereof and at least one ejection portion extending in a direction inclined with respect to the suction portion and having one end that is in communication with an upper end of the suction portion and another end that includes an ejection port.

## Description

### Technical Field

The present invention relates to a liquid dispersion device and a liquid dispersion apparatus using the liquid dispersion device.

### Background Art

Recently, fats and oils have been gaining attention as raw materials to be converted to fuels or chemicals. In particular, attempts to synthesize a long-chain fatty acid ester from an animal fat or oil and/or a vegetable fat or oil via a chemical reaction and use the synthesized long-chain fatty acid ester as a biodiesel fuel that can substitute for gas oil have been actively made.

Meanwhile, technologies for synthesizing various compounds through reactions such as asymmetric synthesis in reaction systems of two or more liquid phases using phase-transfer catalysts or slurry catalysts have also been gaining attention. In many of these reactions, the reaction is accelerated by vigorous stirring of the reaction system.

Two-liquid phase reactions may be employed in the production of biodiesel fuel, for example. Examples thereof include a transesterification reaction based on an enzyme-catalyzed process in which an enzyme such as lipase is employed as a catalyst. In such an enzyme-catalyzed transesterification reaction, for example, liquid enzymes or enzymes immobilized on supports such as ion-exchange resins (immobilized enzymes) are used as enzymes. A liquid enzyme is less expensive than an immobilized enzyme in that it is constituted by a concentrated and purified culture solution. In addition, the enzyme can be used in the following batch of reaction because it remains in glycerol water that is a byproduct of the transesterification reaction described above. This allows repeated use of the liquid enzyme, thereby saving the cost of biodiesel fuel production (Non-Patent Document 1).

In the transesterification reaction using liquid enzymes, a two-phase system constituted by an oil layer and a water layer is used, and an emulsion is formed by stirring reactants at high speed, for example. Such high-speed stirring of the reactants requires a considerable energy load on the stirrer. Meanwhile, to increase productivity as an industrial product, it is desired to reduce the energy required for operations such as stirring of the reactants. However, doing so reduces the emulsion-forming ability of the above reactants, resulting in the contradiction that the transesterification reaction cannot be effectively caused to occur.

Alternatively, an alkaline catalyst can be used in place of the above enzyme. In this case as well, a two-liquid phase reaction system is employed, and vigorous stirring is required for the reaction.

### Related Art Documents

### Non-Patent Documents

Non-Patent Document 1: M. Nordblad et al., Biotechnology and Bioengineering, 2014, Vol.11, No. 12, pp.2446-2453

### Summary of Invention

### Problem to be Solved by the Invention

The present invention is to solve the above-descried problems, and it is an object thereof to provide a liquid dispersion device that can reduce energy required for various operations such as distillation, mixing, and stirring of a treatment liquid, and a liquid dispersion apparatus using the liquid dispersion device.

### Means for Solving the Problem

The present invention provides a liquid dispersion device comprising at least one liquid flow member attachable to a rotary shaft,
wherein the liquid flow member includes:
at least one tubular suction portion extending along the rotary shaft and including a suction port at a lower end thereof and
at least one ejection portion extending in a direction inclined with respect to the suction portion and having one end that is in communication with an upper end of the suction portion and another end that includes an ejection port.

In one embodiment, the suction portion of the liquid flow member is a straight tube extending substantially in parallel with an axial direction of the rotary shaft.

In one embodiment, the liquid dispersion device of the present invention comprises a plurality of the suction portions, wherein the lower ends of all of the suction portions are located at the same position with respect to the rotary shaft.

In one embodiment, the liquid dispersion device of the present invention comprises a plurality of the suction portions, wherein the lower end of one of the suction portions and the lower end of another suction portion of the suction portions are located at different positions with respect to the rotary shaft.

In one embodiment, the liquid dispersion device of the present invention comprises a plurality of the ejection portions, wherein the other ends of all of the ejection portions are located at the same position with respect to the rotary shaft.

In one embodiment, the liquid dispersion device of the present invention comprises a plurality of the ejection portions, wherein the other end of one of the ejection portions and the other end of another ejection portion of the ejection portions are located at different positions with respect to the rotary shaft.

In one embodiment, the at least one suction portion is constituted by a single tube, and the liquid dispersion device includes, as the at least one ejection portion, at least two ejection portions provided at the upper end of the suction portion.

The present invention provides a liquid dispersion apparatus comprising:
a treatment chamber for containing a treatment liquid;
the liquid dispersion device according to any one of claims 1 to 7 provided in the treatment chamber; and
a rotary shaft to which the liquid dispersion device is attached.

In one embodiment, the treatment liquid is constituted by an oil phase and a water phase.

### Effects of the Invention

The liquid dispersion device according to the present invention can move a scooped treatment liquid to a position higher than the liquid surface and disperse the treatment liquid. Thus, it is possible to facilitate vertical movement and circulation of the treatment liquid that is present around the liquid dispersion device. The liquid dispersion device according to the present invention can be incorporated in a liquid dispersion apparatus as a component thereof, and it is possible to thus reduce energy required for physical operations such as distillation, mixing, and stirring of the treatment liquid. For example, in a case where a reaction liquid constituted by two phases of oil and water is contained as the treatment liquid in the liquid dispersion apparatus according to the present invention, it is possible to facilitate emulsification of the reaction liquid and/or extraction of a byproduct (e.g., glycerol) with water without the use of extra power.

### Brief Description of Drawings

FIG. 1 is a schematic diagram showing an example of a liquid dispersion device of the present invention.
FIG. 2 is a perspective view schematically showing an example of a liquid flow member constituting the liquid dispersion device shown in FIG. 1.
FIG. 3 is a schematic diagram showing another example of the liquid dispersion device of the present invention.
FIG. 4 is a schematic diagram showing another example of the liquid dispersion device of the present invention.
FIG. 5 is a schematic diagram showing another example of the liquid dispersion device of the present invention.
FIG. 6 is a schematic diagram showing another example of the liquid dispersion device of the present invention.
FIG. 7 is a schematic diagram showing another example of the liquid dispersion device of the present invention.
FIG. 8 is a schematic diagram showing another example of the liquid dispersion device of the present invention.
FIG. 9 is a schematic diagram showing an example of a liquid dispersion apparatus (reaction apparatus) in which the liquid dispersion device shown in FIG. 1 is incorporated.
FIG. 10 is a schematic diagram showing another example of a liquid dispersion apparatus (reaction apparatus) in which the liquid dispersion device shown in FIG. 1 is incorporated.
FIG. 11(a) is a cross-sectional view of the liquid dispersion apparatus taken along the line A-A shown in FIG. 10, and FIG. 11(b) is a cross-sectional view of the liquid dispersion apparatus taken along the line B-B shown in FIG. 10.
FIG. 12 is a diagram schematically showing other examples of a baffle plate that can be incorporated in a liquid dispersion apparatus of the present invention. FIG. 12(a) is a perspective view of a baffle plate obtained by combining a set of two parallel plates and a set of two parallel plates. FIG. 12(b) is a schematic diagram showing a baffle plate obtained by combining two plates.
FIG. 13 is a schematic diagram showing an example of a liquid dispersion apparatus (reaction apparatus) in which the liquid dispersion device shown in FIG. 1 and the baffle plate shown in FIG. 12(a) are incorporated.
FIG. 14 is a schematic diagram showing another example of a liquid dispersion apparatus (reaction apparatus) in which the liquid dispersion device shown in FIG. 1 is incorporated.
FIG. 15 is a schematic diagram showing an example of a liquid dispersion apparatus (reaction apparatus) in which the liquid dispersion device shown in FIG. 3 is incorporated.
FIG. 16 is a schematic diagram showing an example of a liquid dispersion apparatus (reaction apparatus) in which the liquid dispersion device shown in FIG. 4 is incorporated.
FIG. 17 is a schematic diagram showing an example of a liquid dispersion apparatus (reaction apparatus) in which the liquid dispersion device shown in FIG. 5 is incorporated.
FIG. 18 is a schematic diagram showing an example of a liquid dispersion apparatus (reaction apparatus) in which the liquid dispersion device shown in FIG. 6 is incorporated.
FIG. 19 is a schematic diagram showing an example of a liquid dispersion apparatus (reaction apparatus) in which the liquid dispersion device shown in FIG. 7 is incorporated.
FIG. 20 is a schematic diagram showing an example of a liquid dispersion apparatus (reaction apparatus) in which the liquid dispersion device shown in FIG. 8 is incorporated.

### Description of Embodiments

The following describes the present invention with reference to the accompanying drawings. Note that throughout the drawings referred to below, constituent elements that are the same are denoted by the same reference numerals.

### Liquid Dispersion Device

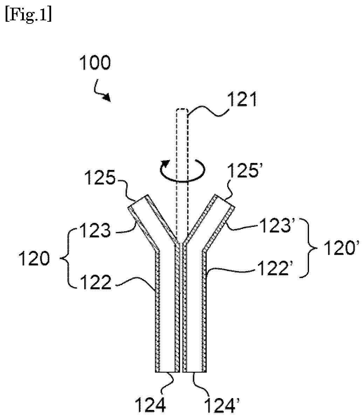

FIG. 1 is a schematic diagram showing an example of a liquid dispersion device of the present invention.

A liquid dispersion device 100 shown in FIG. 1 includes two tubular liquid flow members 120 and 120' that can be attached to a rotary shaft 121. The rotary shaft 121 shown in FIG. 1 extends along the vertical direction. Although FIG. 1 shows two liquid flow members, the present invention is not limited to this configuration, and it is sufficient that the liquid dispersion device includes at least one tubular liquid flow member.

The liquid flow members 120 and 120' are respectively constituted by tubular suction portions 122 and 122' and ejection portions 123 and 123' that are respectively in communication with upper ends of the suction portions 122 and 122' at one end and include ejection ports 125 and 125' at the other end.

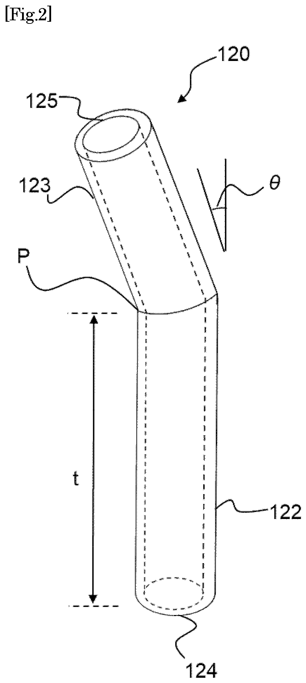

FIG. 2 is a perspective view schematically showing the liquid flow member 120 shown in FIG. 1. The liquid dispersion member 120' shown in FIG. 1 is similar to the liquid flow member 120, and therefore, is omitted.

The suction portion 122 of the liquid dispersion member 120 includes a suction port 124 that is open at the lower end of the suction portion 122. The suction portion 122 shown in FIG. 2 is constituted by a tube of which both the outer circumferential surface and the inner circumferential surface extend substantially straight from the upper end toward the suction port 124 provided at the lower end.

There is no particular limitation on the cross-sectional shape of the suction portion 122 as long as the suction portion 122 has a tubular shape. For example, the cross-sectional shape of the suction portion 122 may be a circular shape, an elliptical shape, a triangular shape, a rectangular shape, or any other polygonal shape. The liquid dispersion device of the present invention may be constituted by a plurality of suction portions that have different cross-sectional shapes. In order to reduce resistance at the time when the suction portion 122 moves in a treatment liquid, which will be described later, the suction portion 122 of the present invention preferably has a circular or elliptical cross-sectional shape. Alternatively, the liquid dispersion device may include a suction portion constituted by a tube disposed in such a manner as to be twisted around the axis of the rotary shaft 121, instead of the suction portion shown in FIG. 2.

Although there is no particular limitation on the size of the suction portion 122, in a case where the suction portion 122 has a circular cross-sectional shape, the outer diameter of the suction portion 122 is 5 mm to 50 mm, for example.

There is no particular limitation on the shape of the suction port 124. The shape of the suction port may be the same as or different from the cross-sectional shape of the suction portion 122 described above. For example, the shape of the suction port 124 may be a circular shape, an elliptical shape, a triangular shape, a rectangular shape, or any other polygonal shape. Note that the suction port 124 may be formed by cutting the suction portion 122 diagonally with respect to its axis to enlarge the opening area and increase the amount of treatment liquid that can be introduced into the suction portion 122.

The straight structure (length) of the suction portion 122 is substantially parallel to the rotary shaft 121 shown in FIG. 1 and designed according to the depth of a treatment liquid 116 that is contained in a treatment chamber 110 of a liquid dispersion apparatus, which will be described later. There is no particular limitation on a distance t from the lower end (the suction port 124) of the suction portion 122 constituting the straight structure to the lowest part of a joint between the suction portion 122 and the ejection portion 123 (a bent point P in the liquid dispersion member 120). The distance t can be adjusted as appropriate by a person skilled in the art according to the capacity of the treatment chamber 110 that is used, for example.

The ejection portion 123 is in communication with the upper end of the suction portion 122 at one end, and inclined with respect to the suction portion 122. Another end of the ejection portion 123 includes the ejection port 125 for discharging the treatment liquid that has passed through the ejection portion 123 to the outside. The ejection portion 123 shown in FIG. 2 has a tubular shape.

In the present invention, an inclination angle θ of the ejection portion 123 with respect to the axial direction of the suction portion 122 can be suitably set by a person skilled in the art, but is, for example, 10° to 89°, and preferably 15° to 45°. When the inclination angle θ is less than 10°, the liquid dispersion member 120 needs to be rotated at a higher speed in order to cause the treatment liquid suctioned from the suction portion 122 to pass through the ejection portion 123 and be discharged from the ejection port 125, and a large amount of energy may be required in operations of the liquid dispersion device. When the inclination angle θ is more than 89°, the ejection portion 123 may be located under the surface of the treatment liquid, and the liquid dispersion device may not be able to appropriately exhibit its liquid dispersion function. Note that an inclination angle of the ejection portion 123' shown in FIG. 1 corresponding to the ejection portion 123 may be the same as or different from the inclination angle θ of the ejection portion 123.

There is no particular limitation on the shape of the ejection port 125 of the ejection portion 123. The shape of the ejection port may be the same as or different from the cross-sectional shape of the suction portion 122 described above. For example, the shape of the ejection port 125 may be a circular shape, an elliptical shape, a triangular shape, a rectangular shape, or any other polygonal shape. Note that, in the present invention, the inner diameter of the ejection portion 123 may be constant or decrease gradually or stepwise from the side that is in communication with the suction portion 122 toward the ejection port 125.

There is no particular limitation on the length of the ejection portion 123 (e.g., the shortest distance from the bent point P in the liquid dispersion member 120 to the ejection port 125), and the length can be set suitably by a person skilled in the art.

Referring again to FIG. 1, the ends of the suction portions 122 and 122' at which the suction ports 124 and 124' are provided are aligned substantially along a straight line in the horizontal direction. With this configuration, both of the liquid dispersion members 120 and 120' constituting the liquid dispersion device 100 can suction the treatment liquid contained in the treatment chamber via the suction ports 124 and 124' at substantially the same depth.

In the liquid dispersion device 100 of the present invention, the liquid dispersion members 120 and 120' are fixed to the rotary shaft 121 (e.g., around the axis of the rotary shaft 121), for example. Note that the liquid dispersion members 120 and 120' are preferably disposed compactly so as to be as close as possible to the rotary shaft 121. When the entire liquid dispersion members 120 and 120' are disposed compactly, the area of a horizontal cross section of the liquid dispersion members 120 and 120' relative to the rotary shaft 121 decreases. Consequently, it is possible to reduce resistance in the treatment liquid as far as possible when the liquid dispersion members 120 and 120' are rotated via the rotary shaft 121.

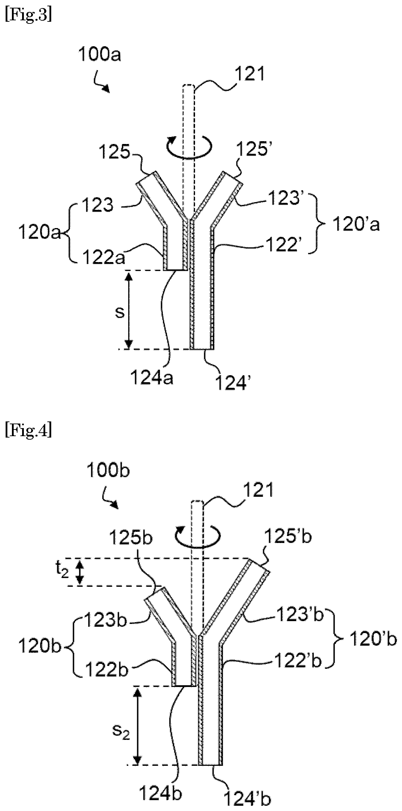

FIG. 3 is a schematic diagram showing another example of the liquid dispersion device of the present invention.

A liquid dispersion device 100a shown in FIG. 3 includes liquid dispersion members 120a and 120'a that have different shapes. An ejection portion 123 of the liquid dispersion member 120a and an ejection portion 123' of the liquid dispersion member 120'a shown in FIG. 3 are the same as those shown in FIG. 1.

On the other hand, the liquid dispersion member 120a shown in FIG. 3 includes a suction portion 122a that is shorter than a suction portion 122' of the liquid dispersion member 120'a, and therefore, there is a difference corresponding to a length S between a suction port 124a of the suction portion 122a and a suction port 124' of the suction portion 122' in the vertical direction. The length S varies according to the type and amount of treatment liquid used, the size of the treatment chamber of the liquid dispersion apparatus, which will be described later, etc., and is not necessarily limited, but is, for example, 10 mm to 2000 mm, and preferably 20 mm to 1000 mm. When there is a difference corresponding to such a length between the suction port 124a of the suction portion 122a and the suction port 124' of the suction portion 122' in the vertical direction, it is possible to suction treatment liquid of different types or compositions via the suction port 124a of the suction portion 122a and the suction port 124' of the suction portion 122'. On the other hand, ejection ports 125 and 125' of the liquid dispersion members 120a and 120'a shown in FIG. 3 are disposed at substantially the same height in the vertical direction.

For example, in a case where a two-phase system reaction liquid constituted by an oil phase and a water phase is used as the treatment liquid and the amount of oil phase that is used and the amount of water phase that is used are adjusted, the suction port 124a of the suction portion 122a, which is located higher than the suction port 124', can preferentially suction a portion of the treatment liquid that is constituted by components of the oil phase or components including the components of the oil phase in a larger amount. On the other hand, the suction port 124' of the suction portion 122', which is located lower than the suction port 124a, can preferentially suction a portion of the treatment liquid that is constituted by components of the water phase or components including the components of the water phase in a larger amount. Thus, it is possible to suction portions of the treatment liquid that have different compositions of components contained therein via the respective suction ports 124a and 124', and the suctioned treatment liquid is discharged from the ejection ports 125 and 125' as the rotary shaft 121 is rotated. The ejection ports 125 and 125' are disposed at substantially the same height in the vertical direction as described above, and therefore, the suctioned components of the oil phase and the suctioned components of the water phase can be mixed and/or stirred in a more complex manner.

FIG. 4 is a schematic diagram showing another example of the liquid dispersion device of the present invention.

A liquid dispersion device 100b shown in FIG. 4 includes liquid dispersion members 120b and 120'b that have different shapes.

The liquid dispersion member 120b shown in FIG. 4 includes a suction portion 122b that is shorter than a suction portion 122'b of the liquid dispersion member 120'b, and therefore, there is a difference corresponding to a length S₂ between a suction port 124b of the suction portion 122b and a suction port 124'b of the suction portion 122'b in the vertical direction. The length S₂ varies according to the type and amount of treatment liquid used, the size of the treatment chamber of the liquid dispersion apparatus, which will be described later, etc., and is not necessarily limited. When there is a difference corresponding to such a length between the suction port 124b of the suction portion 122b and the suction port 1241) of the suction portion 122'b in the vertical direction, it is possible to suction treatment liquid of different types or compositions via the suction port 124b of the suction portion 122b and the suction port 1241) of the suction portion 1221).

The liquid dispersion member 120b shown in FIG. 4 includes an ejection portion 123b that is shorter than an ejection portion 123'b of the liquid dispersion member 1201), and therefore, there is a difference corresponding to a length t₂ between an ejection port 125b of the ejection portion 123b and an ejection port 125'b of the ejection portion 123'b in the vertical direction. The length t₂ varies according to the type and amount of treatment liquid used, the size of the treatment chamber of the liquid dispersion apparatus, which will be described later, etc., and is not necessarily limited. When there is a difference corresponding to such a length between the ejection port 125b of the ejection portion 123b and the ejection port 125'b of the ejection portion 123'b in the vertical direction, the treatment liquid can be ejected from different positions (e.g., heights) by the ejection port 125b of the ejection portion 123b and the ejection port 125'b of the ejection portion 1231).

For example, in a case where a two-phase system reaction liquid constituted by an oil phase and a water phase is used as the treatment liquid and the amount of oil phase that is used and the amount of water phase that is used are adjusted, the suction port 124b of the suction portion 122b, which is located higher than the suction port 124b', can preferentially suction a portion of the treatment liquid that is constituted by components of the oil phase or components including the components of the oil phase in a larger amount. On the other hand, the suction port 1241) of the suction portion 1201), which is located lower than the suction port 124b, can preferentially suction a portion of the treatment liquid that is constituted by components of the water phase or components including the components of the water phase in a larger amount. Thus, it is possible to suction portions of the treatment liquid that have different compositions of components contained therein via the respective suction ports 124b and 1241). Furthermore, the portions of the treatment liquid respectively suctioned via the suction ports 124b and 124'b are respectively discharged from the ejection ports 125b and 125'b disposed at different heights as the rotary shaft 121 is rotated. Therefore, the suctioned components of the oil phase and the suctioned components of the water phase can be mixed and/or stirred in a more complex manner.

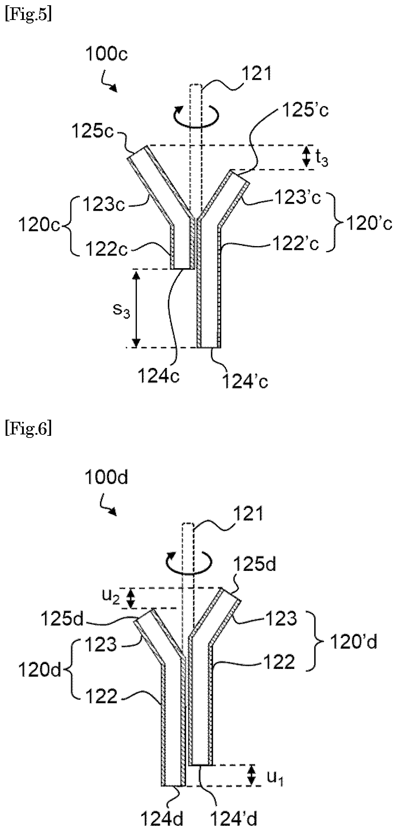

FIG. 5 is a schematic diagram showing another example of the liquid dispersion device of the present invention.

A liquid dispersion device 100c shown in FIG. 5 includes liquid dispersion members 120c and 120'c that have different shapes.

The liquid dispersion member 120c shown in FIG. 5 includes a suction portion 122c that is shorter than a suction portion 122'c of the liquid dispersion member 120'c, and therefore, there is a difference corresponding to a length S₃ between a suction port 124c of the suction portion 122c and a suction port 124'c of the suction portion 122'c in the vertical direction. The length S₃ varies according to the type and amount of treatment liquid used, the size of the treatment chamber of the liquid dispersion apparatus, which will be described later, etc., and is not necessarily limited. When there is a difference corresponding to such a length between the suction port 124c of the suction portion 122c and the suction port 124'c of the suction portion 122'c, it is possible to suction treatment liquid of different types or compositions via the suction port 124c of the suction portion 122c and the suction port 124'c of the suction portion 122'c.

The liquid dispersion member 120c shown in FIG. 5 includes an ejection portion 123c that is longer than an ejection portion 123'b of the liquid dispersion member 120'c, and therefore, there is a difference corresponding to a length t₃ between an ejection port 125c of the ejection portion 123c and an ejection port 125'c of the ejection portion 123'c in the vertical direction. The length t₃ varies according to the type and amount of treatment liquid used, the size of the treatment chamber of the liquid dispersion apparatus, which will be described later, etc., and is not necessarily limited. When there is a difference corresponding to such a length between the ejection port 125c of the ejection portion 123c and the ejection port 125'c of the ejection portion 123'c, the treatment liquid can be ejected from different positions (e.g., heights) by the ejection port 125b of the ejection portion 123c and the ejection port 125'b of the ejection portion 123b.

For example, in a case where a two-phase system reaction liquid constituted by an oil phase and a water phase is used as the treatment liquid and the amount of oil phase that is used and the amount of water phase that is used are adjusted, the suction port 124c of the suction portion 122c, which is located higher than the suction port 124c', can preferentially suction a portion of the treatment liquid that is constituted by components of the oil phase or components including the components of the oil phase in a larger amount. On the other hand, the suction port 124'c of the suction portion 120'c, which is located lower than the suction port 124c, can preferentially suction a portion of the treatment liquid that is constituted by components of the water phase or components including the components of the water phase in a larger amount. Thus, it is possible to suction portions of the treatment liquid that have different compositions of components via the respective suction ports 124c and 124'c. Furthermore, the portions of the treatment liquid respectively suctioned via the suction ports 124c and 124'c are respectively discharged from the ejection ports 125c and 125'c disposed at different heights as the rotary shaft 121 is rotated. Therefore, the suctioned components of the oil phase and the suctioned components of the water phase can be mixed and/or stirred in a more complex manner.

FIG. 6 is a schematic diagram showing another example of the liquid dispersion device of the present invention.

Two liquid dispersion members similar to those included in the liquid dispersion device 100 shown in FIG. 1 are used in a liquid dispersion device 100d shown in FIG. 6. Here, a liquid dispersion member 120'd is fixed to the rotary shaft 121 at a position higher than a liquid dispersion member 120d shown in FIG. 6 by a predetermined length. Accordingly, a suction port 124d of the liquid dispersion member 120d is located below a suction port 124'd of the liquid dispersion member 120'd, and there is a level difference corresponding to a length u₁ between the suction port 124d of the liquid dispersion member 120d and the suction port 124'd of the liquid dispersion member 120'd. On the other hand, an ejection port 125'd of the liquid dispersion device 120'd is located higher than an ejection port 125d of the liquid dispersion device 120d, and there is a level difference corresponding to a length u₂ between the ejection port 125d of the liquid dispersion device 120d and the ejection port 125'd of the liquid dispersion device 120'd. In a case where the liquid dispersion members 120d and 120'd have the same size, for example, the level differences u₁ and u₂ are the same (i.e., u₁=u₂).

In the liquid dispersion device 100d shown in FIG. 6, the suction port 124d can suction the treatment liquid at a position lower than the suction port 124'd due to the level difference u₁ between the suction ports 124d and 124'd. In a case where there is a difference between the composition of treatment liquid that is present in the vicinity of the suction port 124d and the composition of treatment liquid that is present in the vicinity of the suction port 124'd (e.g., there is a difference in the composition such as that between a water phase and an oil phase, which will be described later), it is possible to eject portions of the treatment liquid that have different compositions from the ejection ports 125d and 125'd by rotating the rotary shaft 121.

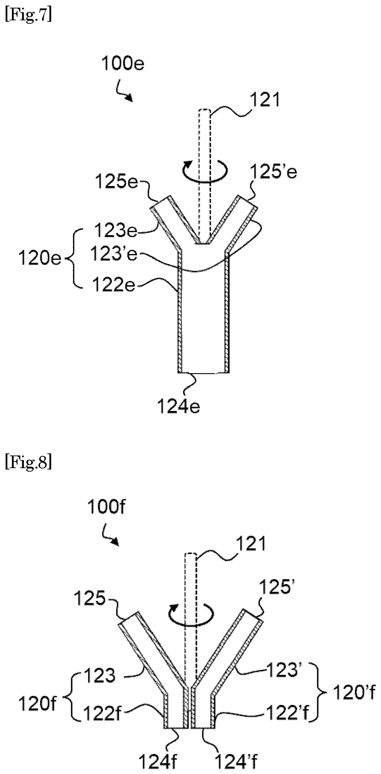

FIG. 7 is a schematic diagram showing another example of the liquid dispersion device of the present invention.

A liquid dispersion device 100e shown in FIG. 7 is constituted by one liquid dispersion member 120e.

The liquid dispersion member 120e shown in FIG. 7 includes a suction portion 122e extending straight along the axial direction of the rotary shaft 121 and two ejection portions 123e and 123'e extending from an upper end of the suction portion 122e. The ejection portions 123e and 123'e are inclined with respect to the suction portion 122e. Note that inclination angles of the ejection portions 123e and 123'e with respect to the axial direction of the rotary shaft 121 may be the same as or different from each other.

A suction port 124e is provided at a lower end of the suction portion. There is no particular limitation on the shape of the suction port 124a. For example, the shape of the suction port 124e may be a circular shape, an elliptical shape, a triangular shape, a rectangular shape, or any other polygonal shape. Note that, in the present invention, the inner diameter of the suction portion 122e may be constant or decrease or increase gradually or stepwise from the lower end toward the upper end. Although the inner diameter of the suction portion 122e shown in FIG. 7 is larger than inner diameters of the ejection portions 123e and 123'e, there is no particular limitation to this configuration. The inner diameter of the suction portion 122e may be smaller than the inner diameters of the ejection portions 123e and 123'e or the inner diameters of the suction portion 122e and the ejection portions 123e and 123'e may be substantially the same as each other.

In the embodiment shown in FIG. 7, the single suction portion 122e rotates as the rotary shaft 121 is rotated, and therefore, it is possible to suppress generation of turbulence in the treatment liquid around the rotating suction portion 122e, when compared with the case shown in FIG. 1, for example. Consequently, the treatment liquid is suctioned via the suction portion 124e while being stirred relatively gently, and ejected from the ejection ports 125 and 125'e of the ejection portions 123e and 123'e. Therefore, it is possible to gently mix and/or stir the suctioned treatment liquid.

FIG. 8 is a schematic diagram showing another example of the liquid dispersion device of the present invention.

A liquid dispersion device 100f shown in FIG. 8 has a configuration similar to that shown in FIG. 1, except that liquid dispersion members 120f and 120f' include suction portions 122f and 122'f that are significantly shorter than the suction portions 122 and 122' of the liquid dispersion device 100 shown in FIG. 1.

In the liquid dispersion device 100f shown in FIG. 8 as well, the treatment liquid suctioned via suction ports 124f and 124'f of the suction portions 122f and 122'f passes through the ejection portions 123 and 123' that are respectively in communication with upper ends of the suction portions 122f and 122'f and can be ejected from the ejection ports 125 and 125'.

The liquid dispersion members described above and fixing members that constitute the liquid dispersion device of the present invention are made of materials that have sufficient strength and appropriate durability against the treatment liquid. Materials that can be used for the liquid dispersion members and the fixing members are not necessarily limited, but examples thereof include metals such as iron, stainless steel, hastelloy, and titanium, and combinations thereof. These components may be given coatings known in the art, such as Teflon (registered trademark), glass lining, or rubber lining, to enhance chemical resistance.

### Liquid Dispersion Apparatus

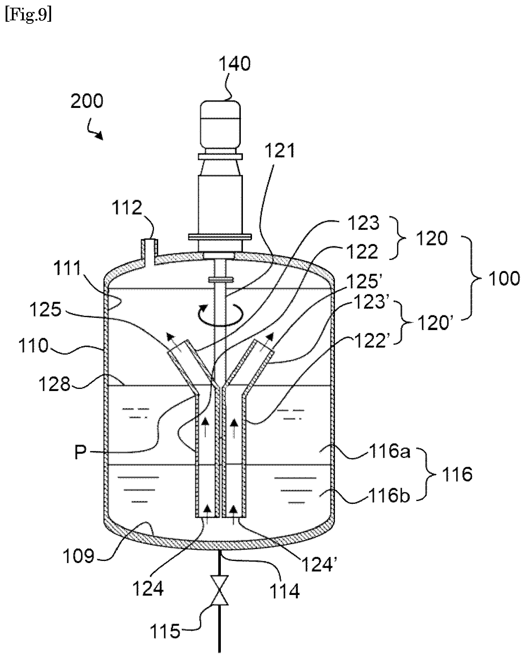

FIG. 9 is a schematic diagram showing an example of a liquid dispersion apparatus in which the liquid dispersion device shown in FIG. 1 is incorporated. The following describes, with reference to FIG. 9, a case in which a liquid dispersion apparatus 200 is used as a reaction apparatus in which a two-phase system reaction liquid constituted by an oil phase 116a and a water phase 116b is used as the treatment liquid 116.

The liquid dispersion apparatus 200 according to the present invention includes a treatment chamber 110 for containing a treatment liquid, the liquid dispersion device 100 shown in FIG. 1, which is disposed in the treatment chamber 110, and the rotary shaft 121 to which the liquid dispersion device 100 is attached.

The treatment chamber 110 is a sealable chamber in which the treatment liquid 116 can be contained and stirred, and has a bottom 109 that is a flat bottom, a round bottom, a conical bottom, or a downward sloping bottom, for example.

The size (capacity) of the treatment chamber 110 is not necessarily limited, because it is set as appropriate according to the application of the liquid dispersion apparatus 200 (e.g., the type of operation to be performed using the liquid dispersion apparatus, such as a reaction or distillation), the amount of treatment liquid to be processed, and the like, but the size is, for example, from 0.1 liters to 1,000,000 liters.

In an embodiment, the treatment chamber 110 also includes a treatment liquid inlet 112 and a product outlet 114. The treatment liquid inlet 112 is an inlet through which the treatment liquid 116 is newly supplied into the treatment chamber 110. The treatment liquid inlet 112 is provided in the top (e.g., in a top lid) of the treatment chamber 110, for example. Alternatively, the treatment liquid inlet 112 may be provided in a side surface of the treatment chamber 110. The number of treatment liquid inlets 112 the treatment chamber 110 has is not limited to one. For example, the treatment chamber 110 may have a plurality of treatment liquid inlets.

The product outlet 114 is an outlet through which a product or concentrate (in the present specification, these will be collectively referred to as "a product or the like") obtained in the treatment chamber 110 is to be taken out of the treatment chamber 110. The product outlet 114 is capable of discharging reaction residues, effluent, and the like in addition to the product or the like, and the discharge can be regulated by opening and closing a valve 115 provided downstream of the product outlet 114, for example. The product outlet 114 is in communication with the center of the bottom 109 in the treatment chamber 110, for example.

The top of the treatment chamber 110 may have an openable structure, such as a lid or a maintenance hole, for example. The top of the treatment chamber 110 may further have a pressure adjustment port (not shown) for adjusting the pressure in the treatment chamber 110. Furthermore, the pressure adjustment port may be connected to a pressure reducing pump (not shown), for example.

The treatment liquid 116 contained in the treatment chamber 110 is a liquid such as an aqueous solution or a slurry. In a case where the liquid dispersion apparatus 400 is used in the production of a fatty acid ester through a transesterification reaction, which will be described later, for example, the treatment liquid 116 is constituted by a two-phase system composed of the oil phase 116a and the water phase 116b, for example, and both the oil phase 116a and the water phase 116b contain reactants such as starting materials and media such as solvents.

The treatment chamber 110 is made of a material similar to the material of the liquid dispersion members described above, for example. Surface treatment similar to that performed on the liquid dispersion members may also be performed as necessary.

The rotary shaft 121 is a shaft with a predetermined rigidity, and has a hollow cylindrical or solid cylindrical shape, for example. The rotary shaft 121 is typically disposed along the vertical direction inside the treatment chamber 110. The thickness of the rotary shaft 121 is not necessarily limited, but is 8 mm to 200 mm, for example. The length of the rotary shaft 121 varies according to the size of the treatment chamber 110 used or the like, and an appropriate length may be selected by a person skilled in the art.

An end of the rotary shaft 121 is connected to a motor 140 or other rotating means at a position above the treatment chamber 110. The other end of the rotary shaft 121 is not connected to the bottom 109 of the treatment chamber 110, and is disposed at a certain distance from the bottom 109 of the treatment chamber 110, for example. This reduces an area in the rotary shaft 121 that comes into contact with the reaction liquid 116. Alternatively, the other end of the rotary shaft may be housed in a predetermined bearing provided at the bottom 109 of the treatment chamber.

The rotary shaft 121 is made of a material similar to the material of the liquid dispersion members described above. Surface treatment similar to that performed on the liquid dispersion members may also be performed as necessary.

In the embodiment shown in FIG. 9, the liquid dispersion device 100 is directly fixed to the rotary shaft 121 around its axis.

In the liquid dispersion apparatus 200 shown in FIG. 9, the treatment liquid 116 is suctioned by (i.e., taken into) the liquid flow members 120 and 120' of the liquid dispersion device 100 via the suction ports 124 and 124' as a result of the rotary shaft 121 being rotated by the motor 140. The suctioned treatment liquid moves through the paths in the suction portions 122 and 122' and the ejection portions 123 and 123' to the ejection ports 125 and 125' due to centrifugal force caused by the rotation of the rotary shaft 121, and is ejected from the ejection ports 125 and 125' into the treatment chamber 110, or more specifically, a space above a liquid surface 128 of the treatment liquid 116 in the treatment chamber 110. This allows the treatment liquid 116 to collide with an inner wall 111 of the treatment chamber 110 and the liquid surface 128 and to move upward from the bottom 109 of the treatment chamber 110, thereby facilitating mixing up (e.g., stirring or circulation in the vertical direction) of the treatment liquid 116 in the height direction of the treatment chamber 110 and flowing down of the treatment liquid 116 after the collision with the inner wall 111. As a result, in a case where a predetermined reaction liquid is used as the treatment liquid, for example, the production of a reaction product in the liquid dispersion apparatus 200 can be progressed more effectively.

In the liquid dispersion apparatus 200 according to the present invention, it is preferable that a predetermined amount of the treatment liquid 116 is contained in the treatment chamber 110 in order to efficiently eject the treatment liquid 116 from the liquid dispersion device 100 by rotating the rotary shaft 121. Specifically, it is preferable that the treatment liquid 116 is contained in the treatment chamber 110 in such a manner that the liquid surface 128 of the treatment liquid 116 is located above the joints between the suction portions 122 and 122' and the ejection portions 123 and 123' constituting the liquid dispersion device 100, or more specifically, the treatment liquid 116 is present from the lower end (the suction port 124) of the suction portion 122 to a position above the lowest part of the joint between the suction portion 122 and the ejection portion 123 (i.e., the bent point P in the liquid dispersion member 120) in both of a case where the rotary shaft 121 is being rotated and a case where the rotary shaft 121 is not being rotated. When the liquid dispersion device 100 and the liquid surface 128 of the treatment liquid 116 satisfy this relationship, the treatment liquid 116 is present around lower end parts of the ejection portions 123 and 123' as well as around the suction portions 122 and 122'. When the liquid dispersion device 100 is rotated via the rotary shaft 121 in the state where this relationship is satisfied, the treatment liquid 116 forms a vortex as the liquid dispersion device 100 is rotated, and can rise to the ejection ports 125 and 125' through the inclined paths in the ejection portions 123 and 123' due to centrifugal force caused by the rotation of the liquid dispersion device 100. Finally, the treatment liquid 116 that has risen can be effectively ejected from the ejection ports 125 and 125' to the outside of the liquid dispersion members 120 and 120'.

Note that in order to effectively eject the treatment liquid 116 from the ejection ports 125 and 125' to the outside of the liquid dispersion members 120 and 120' in the above-described case, it is preferable that the surface (vortex surface) of the treatment liquid 116 is located above the bent point P in the liquid dispersion member 120 even when the vortex is formed along with the rotation of the liquid dispersion device 100.

Although an example has been described with reference to FIGS. 1 and 9 in which the two liquid dispersion members 120 and 120' of the liquid dispersion device 100 are disposed symmetrically with respect to the rotary shaft 121, there is no particular limitation to the number and arrangement of liquid dispersion members in the present invention. The liquid dispersion device according to the present invention may be constituted by only one liquid dispersion member or a plurality of (e.g., two, three, four, five, six, seven, or eight) liquid dispersion members. In the case where a plurality of liquid dispersion members are used, it is preferable that the liquid dispersion members are held at substantially constant intervals (e.g., angles) so that the rotary shaft can rotate smoothly.

In the embodiment shown in FIG. 9, the water phase 116b is located below the oil phase 116a, but the arrangement of the oil phase 116a and the water phase 116b in the liquid dispersion apparatus according to the present invention is not limited to this example. For example, the arrangement of the oil phase and the water phase may be inverted in a system in which methanol is added to the water phase, and the oil phase may be located below the water phase. The liquid dispersion apparatus according to the present invention can also be used for a two-phase system reaction liquid including an oil phase and a water phase arranged as described above.

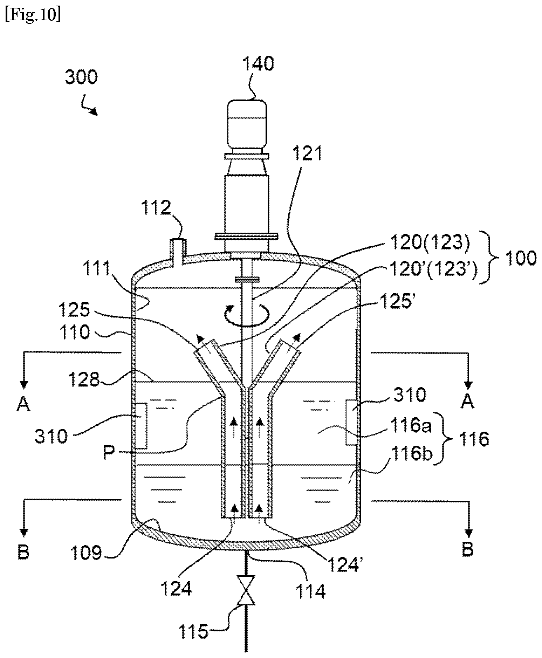

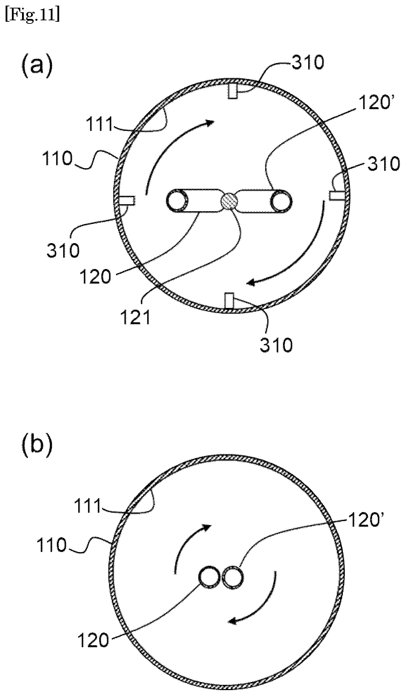

FIG. 10 is a schematic diagram showing another example of a liquid dispersion apparatus in which the liquid dispersion device shown in FIG. 1 is incorporated. FIG. 11(a) is a cross-sectional view of the liquid dispersion apparatus taken along the line A-A shown in FIG. 10, and FIG. 11(b) is a cross-sectional view of the liquid dispersion apparatus taken along the line B-B shown in FIG. 10.

A liquid dispersion apparatus 300 according to the present invention includes a plurality of baffle plates 310 that are provided on the inner wall 111 of the treatment chamber 110 and extend from the bottom 109 of the treatment chamber 110 to a position above the liquid surface 128 of the reaction liquid 116 (see FIGS. 10, 11(a), and 11(b)). The baffle plates 310 shown in FIG. 10 are provided in the vicinity of the liquid surface 128 of the treatment liquid 116 that is in a static state (i.e., upper ends of the baffle plates 310 are at substantially the same height as or slightly below the bent point P in the liquid dispersion member 120), for example.

The baffle plates 310 have a function of preventing the treatment liquid 116 in the treatment chamber 110 from rotating together with the liquid flow members 120 and 120' rotated via the rotary shaft 121. In other words, the baffle plates 310 serve as obstacles when the treatment liquid 116 rotates in the horizontal direction inside the treatment chamber 110, and thus formation of a vortex can be prevented or suppressed. Consequently, even when the liquid dispersion members 120 and 120' are rotated, the surface (vortex surface) of the treatment liquid 116 is located above the bent point P in the liquid dispersion members, and therefore, the ejection portions 123 and 123' of the liquid dispersion members 120 and 120' are likely to be filled with the treatment liquid 116, and the treatment liquid 116 is more effectively ejected from the ejection ports 125 and 125'. Eventually, a large amount of treatment liquid 116 can be ejected from the ejection ports 125 and 125', and the treatment liquid 116 in the treatment chamber 110 can be mixed and stirred more efficiently.

Although the number of baffle plates 310 provided in the treatment chamber 110 is not necessarily limited, the liquid dispersion apparatus includes, for example, one to eight baffle plates provided at substantially equal intervals on the inner wall 111 of the treatment chamber 110.

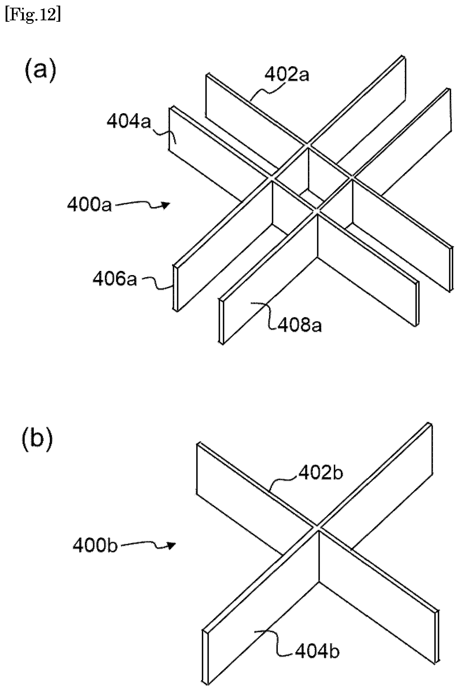

FIG. 12 is a diagram schematically showing other examples of baffle plates that can be incorporated in the liquid dispersion apparatus according to the present invention.

The liquid dispersion apparatus according to the present invention may include a baffle plate 400a shown in FIG. 12(a).

The baffle plate 400a has a structure in which two plates 402a and 404a arranged in parallel with each other and two plates 406a and 408a arranged in parallel with each other cross at an angle of substantially 90°. The baffle plate 400a is designed to have a size that allows the entire baffle plate to be installed on the bottom of the treatment chamber of the liquid dispersion apparatus. There is no particular limitation on the material of the baffle plate 400a, and a material that has sufficient durability against the treatment liquid and predetermined strength can be adopted.

Alternatively, a baffle plate may have a structure shown in FIG. 12(b).

A baffle plate 400b shown in FIG. 12(b) has a structure in which two plates 402b and 404b cross each other at an angle of substantially 90°. The baffle plate 400b is also designed to have a size that allows the entire baffle plate to be installed on the bottom of the treatment chamber of the liquid dispersion apparatus. The baffle plate 400b can be made of a material similar to the material of the baffle plate 400a described above.

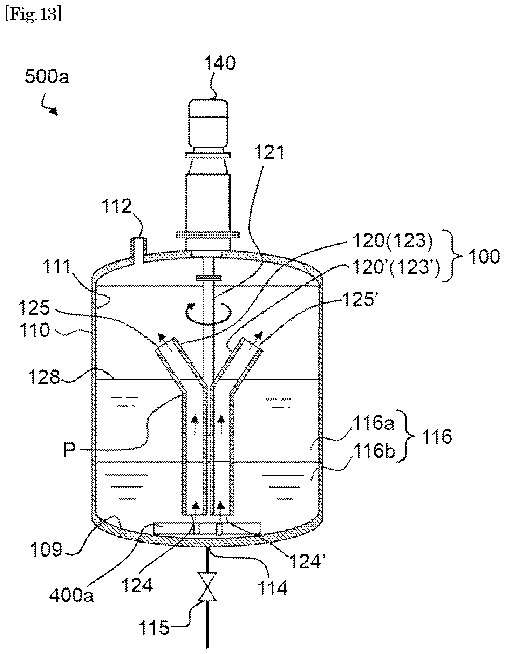

FIG. 13 is a schematic diagram showing an example of a liquid dispersion apparatus (reaction apparatus) in which the liquid dispersion device shown in FIG. 1 and the baffle plate shown in FIG. 12(a) are incorporated.

In a liquid dispersion apparatus 500a shown in FIG. 13, the baffle plate 400a is disposed at substantially the center of the bottom 109 of the treatment chamber 110. A predetermined gap is provided between the baffle plate 400a and the suction portions 124 and 124' of the liquid dispersion device 100. The baffle plate 400a disposed on the bottom 109 of the treatment chamber 110 as described above prevents the treatment liquid 116 from freely rotating in the treatment chamber 110 even when the liquid dispersion device 100 is rotated via the rotary shaft 121 about the axis of the rotary shaft 121, and consequently, it is possible to prevent formation of a large vortex.

In the liquid dispersion apparatus 500a shown in FIG. 13 as well, when the liquid dispersion members 120 and 120' are rotated, the surface (vortex surface) of the treatment liquid 116 is located above the bent point P of the liquid dispersion members owing to the presence of the baffle plate 400a, and therefore, the ejection portions 123 and 123' of the liquid dispersion members 120 and 120' are likely to be filled with the treatment liquid 116, and the treatment liquid 116 is more effectively ejected from the ejection ports 125 and 125'. Eventually, a large amount of treatment liquid 116 can be ejected from the ejection ports 125 and 125', and the treatment liquid 116 in the treatment chamber 110 can be mixed and stirred more efficiently.

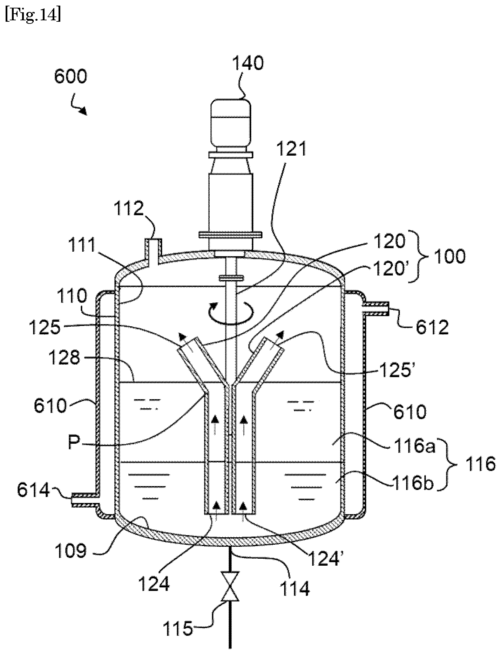

FIG. 14 is a schematic diagram showing another example of a liquid dispersion apparatus in which the liquid dispersion device shown in FIG. 1 is incorporated.

In a liquid dispersion apparatus 600 shown in FIG. 14, a jacket 610 for temperature control is provided around the outer circumferential surface of the treatment chamber 110. The jacket 610 shown in FIG. 14 is made of a hollow material, for example, and a thermal medium such as steam, water, or heat transfer oil can be introduced via a pipe (not shown) from a jacket inlet 612 and discharged from a jacket outlet 614, for example. The thermal medium introduced into the jacket 610 can control the temperature of the treatment liquid 116 in the treatment chamber 110, by heating the treatment liquid 116 from outside of the treatment chamber 110.

In the embodiment shown in FIG. 14, a thermal medium for heating is used as the thermal medium to heat the inside of the treatment chamber 110, but the present invention is not limited to this example. Instead of the thermal medium for heating, a thermal medium for cooling, such as liquid nitrogen, water, brine, or gas refrigerant (e.g., carbon dioxide, chlorofluorocarbon) may be introduced into the jacket 610.

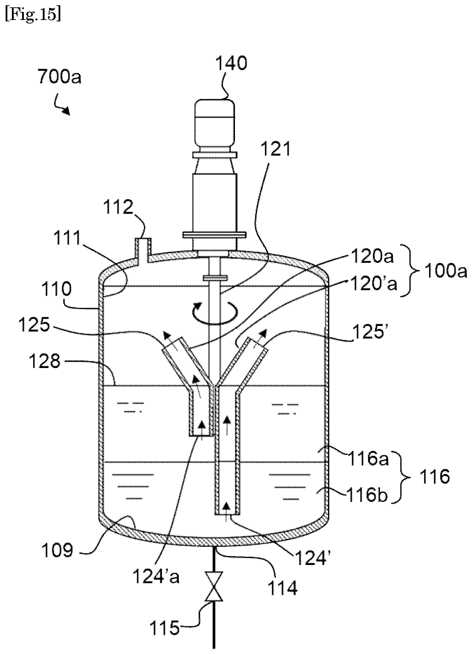

FIG. 15 is a schematic diagram showing an example of a liquid dispersion apparatus in which the liquid dispersion device shown in FIG. 3 is incorporated.

In a liquid dispersion apparatus 700a shown in FIG. 15, the suction ports 124a and 124' of the liquid dispersion members 120a and 120'a constituting the liquid dispersion device 100a are located at different heights in the vertical direction.

When the oil phase 116a and the water phase 116b of the treatment liquid 116 are contained at respective positions shown in FIG. 15 (i.e., the suction port 124a of the liquid dispersion member 120a is located in the oil phase 116a and the suction port 124' of the liquid dispersion member 120'a is located in the water phase 116b in a static state, for example) in this configuration and the rotary shaft 121 is rotated by the motor 140, the suction port 124a of the liquid dispersion member 120a can suction a portion of the treatment liquid 116 that is mostly composed of components of the oil phase 116a or contains those components in a large amount, and the suction port 124' of the liquid dispersion member 120'a can suction a portion of the treatment liquid 116 that is mostly composed of components of the water phase 116b or contains those components in a large amount (although portions of the oil phase 116a and the water phase 116b may be mixed by the rotation of the liquid dispersion device 100a). The portions of the treatment liquid 116 respectively suctioned via the suction ports 124a and 124' are respectively ejected from the ejection ports 125 and 125' of the liquid dispersion members 120a and 120'a toward the liquid surface 128 and the inner wall 111 of the treatment chamber 110, for example.

Here, the treatment liquid 116 ejected in a turn of the liquid dispersion members 120a and 120'a and colliding with the inner wall 111 flows down along the inner wall 111 while forming a thin film. Thereafter, the treatment liquid 116 ejected in another turn of the liquid dispersion members 120a and 120'a and colliding with the inner wall 111 also flows down along the inner wall 111 while forming a thin film. Accordingly, when the liquid dispersion members 120a and 120'a are kept rotated, portions of the treatment liquid 116 respectively suctioned via the suction ports 124a and 124' and having different compositions flow down along the inner wall 111 while forming multiple layers of thin films on the inner wall 111.

Consequently, the components of the oil phase 116a and the components of the water phase 116b of the treatment liquid 116 can be effectively mixed or stirred in the treatment chamber 110.

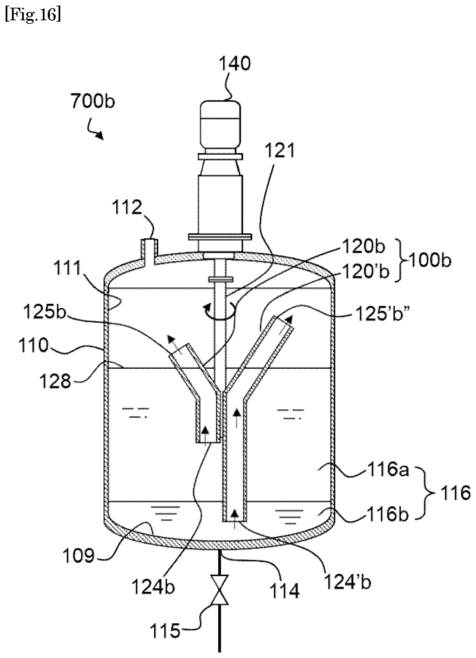

FIG. 16 is a schematic diagram showing an example of a liquid dispersion apparatus (reaction apparatus) in which the liquid dispersion device shown in FIG. 4 is incorporated.

In a liquid dispersion apparatus 700b shown in FIG. 16, the suction ports 124b and 124' b of the liquid dispersion members 120b and 120'b constituting the liquid dispersion device 100b are located at different heights in the vertical direction. Furthermore, the ejection ports 125b and 1251) of the liquid dispersion members 120b and 120'b constituting the liquid dispersion device 100b are also located at different heights in the vertical direction.

When the oil phase 116a and the water phase 116b of the treatment liquid 116 are contained at respective positions shown in FIG. 16 (i.e., the suction port 124b of the liquid dispersion member 120b is located in the oil phase 116a and the suction port 124'b of the liquid dispersion member 120'b is located in the water phase 116b in a static state, for example) in this configuration and the rotary shaft 121 is rotated by the motor 140, the suction port 124b of the liquid dispersion member 120b can suction a portion of the treatment liquid 116 that is mostly composed of components of the oil phase 116a or contains those components in a large amount, and the suction port 1241) of the liquid dispersion member 120'b can suction a portion of the treatment liquid 116 that is mostly composed of components of the water phase 116b or contains those components in a large amount (although portions of the oil phase 116a and the water phase 116b may be mixed by the rotation of the liquid dispersion device 100b). The portions of the treatment liquid 116 respectively suctioned via the suction ports 124b and 124'b can be respectively ejected from the ejection ports 125b and 125'b of the liquid dispersion members 120b and 120'b toward the liquid surface 128 and the inner wall 111 of the treatment chamber 110, for example.

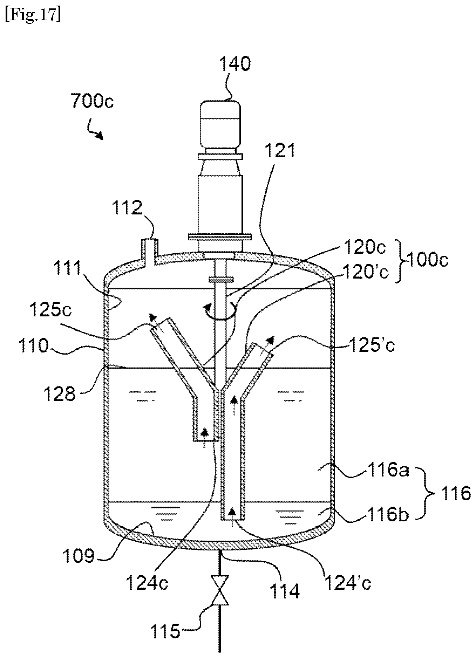

FIG. 17 is a schematic diagram showing an example of a liquid dispersion apparatus (reaction apparatus) in which the liquid dispersion device shown in FIG. 5 is incorporated.

In a liquid dispersion apparatus 700c shown in FIG. 17, the suction ports 124c and 124'c of the liquid dispersion members 120c and 120'c constituting the liquid dispersion device 100c are located at different heights in the vertical direction. Furthermore, the ejection ports 125c and 125'c of the liquid dispersion members 120c and 120'c constituting the liquid dispersion device 100c are also located at different heights in the vertical direction.

When the oil phase 116a and the water phase 116b of the treatment liquid 116 are contained at respective positions shown in FIG. 17 (i.e., the suction port 124c of the liquid dispersion member 120c is located in the oil phase 116a and the suction port 124'c of the liquid dispersion member 120'c is located in the water phase 116b in a static state, for example) in this configuration and the rotary shaft 121 is rotated by the motor 140, the suction port 124c of the liquid dispersion member 120c can suction a portion of the treatment liquid 116 that is mostly composed of components of the oil phase 116a or contains those components in a large amount, and the suction port 124'c of the liquid dispersion member 120'c can suction a portion of the treatment liquid 116 that is mostly composed of components of the water phase 116b or contains those components in a large amount (although portions of the oil phase 116a and the water phase 116b may be mixed by the rotation of the liquid dispersion device 100b). The portions of the treatment liquid 116 respectively suctioned via the suction ports 124c and 124'c can be respectively ejected from the ejection ports 125c and 125'c of the liquid dispersion members 120c and 120'c toward the liquid surface 128 and the inner wall 111 of the treatment chamber 110, for example.

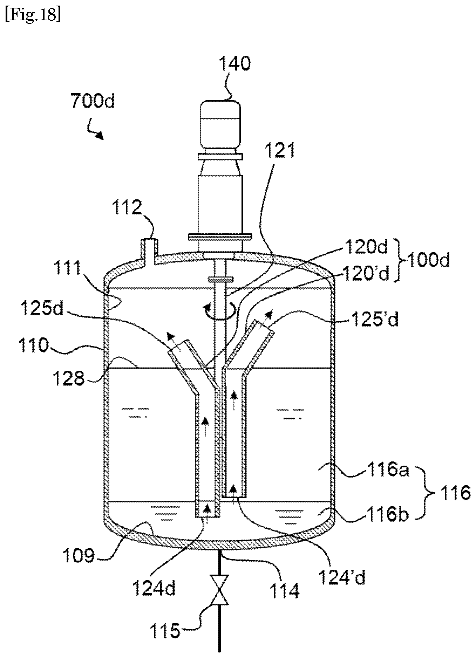

FIG. 18 is a schematic diagram showing an example of a liquid dispersion apparatus in which the liquid dispersion device shown in FIG. 6 is incorporated.

In a liquid dispersion apparatus 700d shown in FIG. 18, the suction ports 124d and 124'd of the liquid dispersion members 120d and 120'd constituting the liquid dispersion device 100d are located at different heights in the vertical direction, and the ejection ports 125d and 125'd of the liquid dispersion members 120d and 120'd are also located at different heights in the vertical direction.

In the embodiment shown in FIG. 18, the suction port 124d of the liquid dispersion member 120d is located in the water phase 116b, and the suction port 124'd of the liquid dispersion member 120'd is located in the oil phase 116a. When the rotary shaft 121 is rotated in this state, the suction port 124d of the liquid dispersion member 120d can preferentially suction components of the water phase 116b or components including an abundant amount of the components of the water phase 116b (hereinafter, these will be referred to as "the components of the water phase 116b, etc."), and the suction port 124'd of the liquid dispersion member 120'd can preferentially suction components of the oil phase 116a or components including an abundant amount of the components of the oil phase 116a (hereinafter, these will be referred to as "the components of the oil phase 116a, etc.").

Moreover, the ejection port 125'd of the liquid dispersion member 120'd is open at a position higher than the ejection port 125d of the liquid dispersion member 120d, and therefore, the components of the oil phase 116a, etc., ejected from the ejection port 125'd are discharged toward a position on the inner wall 111 of the treatment chamber 110 that is higher than a position toward which the components of the water phase 116b, etc., are ejected from the ejection port 125d. The components of the oil phase 116a, etc., that have collided with the inner wall 111 flow down a distance longer than a distance that the components of the water phase 116b, etc., which have also collided with the inner wall 111, flow down to the liquid surface 128. Thus, the components of the oil phase 116a, etc., and the components of the water phase 116b, etc., flow down different distances, and this provides an opportunity for the components of the oil phase 116a, etc., and the components of the water phase 116b, etc., to be mixed in a more complex manner on the inner wall 111 and in the vicinity of the liquid surface 128.

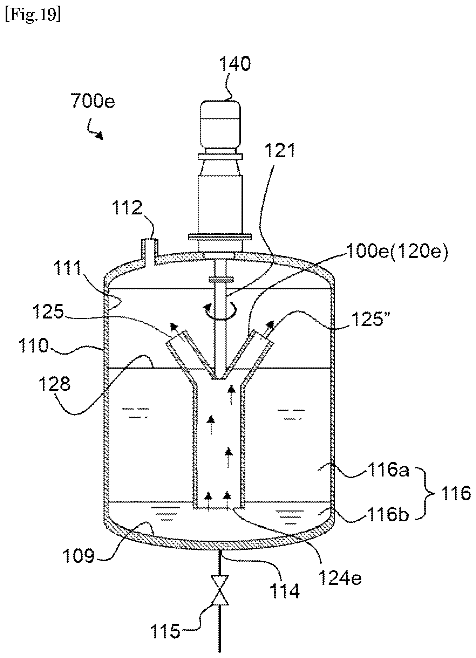

FIG. 19 is a schematic diagram showing an example of a liquid dispersion apparatus (reaction apparatus) in which the liquid dispersion device shown in FIG. 7 is incorporated.

In a liquid dispersion apparatus 700e shown in FIG. 19, the suction port 124e of the liquid dispersion member 120e constituting the liquid dispersion device 100e faces the bottom 109 of the stirring chamber 110. The suction port 124e of the liquid dispersion member 120e shown in FIG. 19 is located near the interface between the oil phase 116a and the water phase 116b of the treatment liquid 116, but there is no particular limitation to this arrangement. The suction port 124e of the liquid dispersion member 120e may be located either in the oil phase 116a or in the water phase 116b when the treatment liquid 116 is in a static state.

When the rotary shaft 121 is rotated by the motor 140 in this configuration, the oil phase 116a and the water phase 116b are suctioned via the suction port 124e of the liquid dispersion member 120e while being mixed with each other by the rotation of the liquid dispersion device 100e. The treatment liquid 116 suctioned via the suction port 124e can be ejected from the ejection ports 125e and 125'e of the liquid dispersion member 120e toward the liquid surface 128 and the inner wall 111 of the treatment chamber 110, for example.

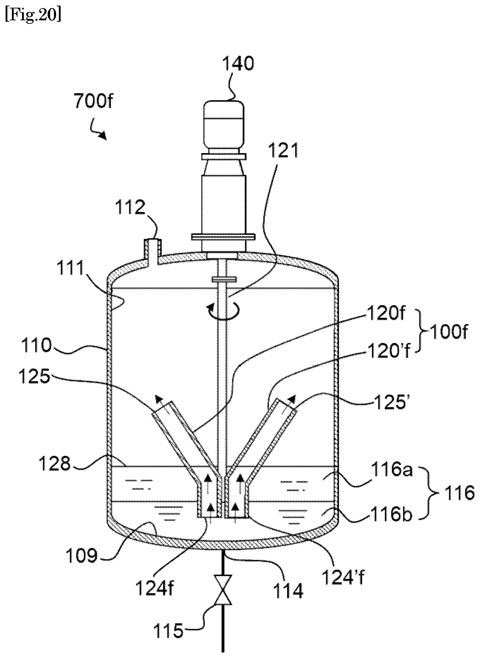

FIG. 20 is a schematic diagram showing an example of a liquid dispersion apparatus (reaction apparatus) in which the liquid dispersion device shown in FIG. 8 is incorporated.

In a liquid dispersion apparatus 700f shown in FIG. 20, the suction ports 124f and 124'f of the liquid dispersion members 120f and 120'f constituting the liquid dispersion device 100f are located at substantially the same height in the vertical direction. Furthermore, the ejection ports 125 and 125' of the liquid dispersion members 120f and 120'f constituting the liquid dispersion device 100f are located at different heights in the vertical direction.

As described above, the suction portions 122f and 122'f constituting the liquid dispersion members 120f and 120'f of the liquid dispersion device 100f are relatively short, and therefore, even when the amount of treatment liquid 116 is relatively small (i.e., amounts of liquids constituting the oil phase 116a and the water phase 116b are small), for example, the liquid dispersion apparatus 700f according to the present invention can suction the treatment liquid 116 via the suction portions 124f and 124'f by rotating the rotary shaft 121, and eject the treatment liquid from the ejection ports 125f and 125'f toward the liquid surface 128 and the inner wall 111 of the treatment chamber 110.

In a case where a liquid dispersion apparatus according to the present invention is used as a reaction apparatus, for example, the apparatus is useful in the production of various reaction products in which stirring of a reaction liquid (reactants) is desired. Particularly in a two-phase system (heterogeneous reaction system) such as those constituted by an oil phase and a water phase and a reaction system constituted by multiple phases (e.g., two phases) of chemical substances, it is possible to obtain a reaction product more effectively with use of the liquid dispersion apparatus, when compared with a case where a conventional stirrer is used. An example of a reaction carried out using a two-phase system is a transesterification reaction for producing a fatty acid ester.

In the present invention, the suction portion of each liquid dispersion member constituting the liquid dispersion device extends in the vertical direction, and can be rotated with a relatively small radius of rotation via the rotary shaft, to which the suction portion is attached. On the other hand, the ejection portion is inclined at a predetermined angle, and therefore, the treatment liquid can be easily discharged to the outside through the path inside the ejection portion by centrifugal force caused by the rotation. Consequently, the liquid dispersion device according to the present invention can be rotated with less energy in the treatment liquid, and it is possible to efficiently discharge the treatment liquid, i.e., perform various operations such as mixing, stirring, a reaction, evaporation, distillation, and the like of the treatment liquid.

### Method for Producing Reaction Product

Next, the following describes a method for producing a predetermined reaction product with use of a liquid dispersion apparatus in which the liquid dispersion device of the present invention is incorporated.

In the production method according to the present invention, stirring is performed through circulation of a treatment liquid in the liquid dispersion apparatus in which the liquid dispersion device is incorporated. Here, the term "stirring through circulation" as used herein refers to both stirring performed by applying horizontal rotation to a target liquid (e.g., a reaction liquid) and mixing up (or mixing) of the entire liquid through vertical movement and circulation of the liquid, as in the case of using the above-described liquid dispersion apparatus.

The treatment liquid for use in the present invention contains an inorganic or organic liquid medium, and its chemical reaction can be commonly progressed and controlled through stirring with use of a stirrer or the like. For example, a heterogeneous reaction liquid is used as the treatment liquid. For example, a reaction liquid constituted by an oil phase and a water phase is useful in that the emulsification of the reaction liquid can be improved and facilitated by the above-mentioned stirring through circulation.

In the case where the treatment liquid is a heterogeneous reaction liquid, the treatment liquid contains a raw material fat or oil, a liquid enzyme, an alcohol having 1 to 8 carbon atoms, and water, for example.

The raw material fat or oil is, for example, a fat or oil that can be used to produce a fatty acid ester for biodiesel fuel. The raw material fat or oil may be a preliminarily refined fat or oil or may be an unrefined fat or oil containing impurities. Examples of the raw material fat or oil include cooking fats and oils, waste cooking fats and oils, crude oils, and other waste matter-based fats and oils, as well as combinations thereof. Examples of the cooking fats and oils and waste cooking fats and oils include vegetable fats and oils, animal fats and oils, fish oils, fats and oils produced by microorganisms, and waste oils thereof, as well as mixtures (mixed fats and oils) thereof. Examples of the vegetable fats and oils include, but are not necessarily limited to, soybean oil, rapeseed oil, palm oil, and olive oil. Examples of the animal fats and oils include, but are not necessarily limited to, beef tallow, lard, chicken fat, whale oil, and mutton tallow. Examples of the fish oils include, but are not necessarily limited to, sardine oil, tuna oil, and squid oil. Examples of the fats and oils produced by microorganisms include, but are not necessarily limited to, fats and oils produced by microorganisms belonging to the genus *Mortierella,* the genus *Schizochytrium,* or the like.

Examples of the crude oils include unrefined or unprocessed fats and oils that are obtained from a conventional oil expression step for cooking fats and oils, and the crude oils may contain, for example, gum-like impurities, such as phospholipids and/or proteins, free fatty acids, pigments, trace metals, and other hydrocarbon impurities that are soluble in oil, as well as combinations thereof. There is no particular limitation on the amount of impurities contained in a crude oil.

Examples of the other waste matter-based fats and oils include oil foots obtained as a result of refining, in the presence of an alkali, raw oil that is produced during the production of a food fat or oil, heat-treatment oil, press oil, and rolling oil, as well as combinations thereof.

The raw material fat or oil may contain water in any amount, as long as the water does not inhibit the inherent characteristics of the fat or oil. Furthermore, an unreacted fat or oil remaining in a solution that has been used in a separate reaction for forming a fatty acid ester may also be used as the raw material fat or oil.

With regard to the liquid enzyme, enzyme catalysts that have the properties of liquid at room temperature, of any enzyme catalysts that can be used for a fatty acid ester generating reaction can be used. Examples of the liquid enzyme include lipase, cutinase, and combinations thereof. Here, the term "lipase" as used herein refers to an enzyme that has the ability to act on a glyceride (also called acylglycerol) and degrade the glyceride into glycerol or a partial glyceride and a fatty acid, and also has the ability to generate a fatty acid ester via transesterification in the presence of a linear lower alcohol.

The lipase may be 1,3- specific or may be nonspecific. In terms of the capability of producing a linear lower alcohol ester of a fatty acid, it is preferable that the lipase is nonspecific. Examples of the lipase include lipases derived from filamentous fungi belonging to the genus *Rhizomucor*(*Rhizomucor miehei*)*,* the genus *Mucor,* the genus *Aspergillus,* the genus *Rhizopus,* the genus *Perzicillium,* and the like; lipases derived from yeasts belonging to the genus *Candida (Candida antarcitica, Candida rugosa,* and *Candida cylindracea*), *Pichia,* and the like; lipases derived from bacteria belonging to the genus *Pseudomonas,* the genus *Serratia,* and the like; and lipases derived from animals, such as pig pancreas. A liquid lipase can be obtained by, for example, concentrating and refining a culture solution of any of the above-described microorganisms containing lipase produced by that microorganism or by dissolving powdered lipase in water. A commercially available liquid lipase can also be used.

The amount of the above-described liquid enzyme used in the present invention varies according to the type and/or amount of raw material fat or oil, for example, and is therefore not necessarily limited, but is preferably 0.1 to 50 parts by mass, and more preferably 0.2 to 30 parts by mass, with respect to 100 parts by mass of raw material fat or oil that is used. When the amount of liquid enzyme that is used is less than 0.1 parts by mass, an effective transesterification reaction cannot be catalyzed, and there is thus a risk that the yield and/or the percentage yield of a desired fatty acid ester may be reduced. When the amount of liquid enzyme that is used exceeds 50 parts by mass, the yield and/or the percentage yield of the desired fatty acid ester that is obtained through the transesterification reaction no longer changes, but rather there is a risk that the production efficiency may be reduced.

The alcohol is a linear or branched lower alcohol (e.g., an alcohol having 1 to 8 carbon atoms, and preferably an alcohol having 1 to 4 carbon atoms). A linear lower alcohol is preferable. Examples of the linear lower alcohol include, but are not necessarily limited to, methanol, ethanol, n-propanol, and n-butanol, as well as combinations thereof.

The amount of the above-described alcohol varies according to the type and/or amount of raw material fat or oil that is used, for example, and is therefore not necessarily limited, but is preferably 5 to 100 parts by mass, and more preferably 10 to 30 parts by mass, with respect to 100 parts by mass of raw material fat or oil. When the amount of alcohol that is used is less than 5 parts by mass, an effective transesterification reaction cannot be realized, and there is thus a risk that the yield and/or the percentage yield of the desired fatty acid ester may be reduced. When the amount of alcohol that is used exceeds 100 parts by mass, the yield and/or the percentage yield of the desired fatty acid ester that is obtained through the transesterification reaction no longer changes, but rather there is a risk that the production efficiency may be reduced.

Water that is used in the present invention may be any of distilled water, ion-exchanged water, tap water, and pure water. The amount of the above-described water used varies according to the type and/or amount of raw material fat or oil that is used, for example, and is therefore not necessarily limited, but is preferably 0.1 to 50 parts by mass, and more preferably 2 to 30 parts by mass, with respect to 100 parts by mass of raw material fat or oil. When the amount of water that is used is less than 0.1 parts by mass, the amount of water layer formed in the reaction system is insufficient, making it impossible for an effective transesterification reaction using the above-described raw material fat or oil, liquid enzyme, and alcohol to occur, and there is thus a risk that the yield and/or the percentage yield of the desired fatty acid ester may be reduced. When the amount of water that is used exceeds 50 parts by mass, the yield and/or the percentage yield of the desired fatty acid ester that is obtained through the transesterification reaction no longer changes, but rather there is a risk that the production efficiency may be reduced.

In the method of the present invention, a predetermined electrolyte may be added to the above-described treatment liquid. Examples of anions constituting the electrolyte include, but are not necessarily limited to, hydrogen carbonate ions, carbonate ions, chloride ions, hydroxide ions, citrate ions, hydrogen phosphate ions, dihydrogen phosphate ions, and phosphate ions, as well as combinations thereof. Examples of cations constituting the electrolyte include alkali metal ions and alkaline earth metal ions, as well as combinations thereof, and more specifically include sodium ions, potassium ions, and calcium ions, as well as combinations thereof. Preferred examples of the electrolyte include sodium hydrogen carbonate (baking soda), sodium carbonate, calcium chloride, calcium hydroxide, trisodium citrate, sodium hydrogen phosphate, sodium dihydrogen phosphate, sodium chloride, and trisodium phosphate, as well as combinations thereof. Sodium hydrogen carbonate (baking soda) is more preferable because it is versatile and easily available, for example.

The above-described raw material fat or oil, catalyst, alcohol, and water are placed into the treatment chamber 110 of the liquid dispersion apparatus 200 shown in FIG. 9 through the treatment liquid inlet 112 simultaneously or in any order to form a treatment liquid 116 constituted by an oil phase 116a and a water phase 116b, for example. Subsequently, when the liquid flow members 120 and 120' of the liquid dispersion device 100 are rotated inside the treatment chamber 110 by the rotation of the rotary shaft 121, the treatment liquid 116 is suctioned from the liquid flow members 120 and 120', and the suctioned treatment liquid moves upward through the paths inside the suction portions 122 and 122' and the ejection portions 123 and 123' and then ejected from the ejection ports 125 and 125' of the liquid flow members 120 and 120' as described above. This movement of the treatment liquid 116 facilitates stirring of the treatment liquid 116 and the formation of a fatty acid ester that is a reaction product. The temperature in the treatment chamber 110 is not necessarily limited, but is, for example, 5°C to 80°C, preferably 15°C to 80°C, and more preferably 25°C to 50°C.

It should be noted that the rotary shaft does not necessarily need to be rotated at a high speed (e.g., 600 rpm or higher) in the liquid dispersion apparatus 200. For example, the rotational speed may be set to a low speed (e.g., 80 rpm or higher and lower than 300 rpm) or a medium speed (e.g., 300 rpm or higher and lower than 600 rpm). Furthermore, the reaction time varies according to the amount of each of the raw material fat or oil, catalyst, alcohol, and water, and is therefore not necessarily limited. A suitable period of time may be set by a person skilled in the art.

After the completion of the reaction, the product and reaction residues are taken out of the treatment chamber 110 of the liquid dispersion apparatus 200, and separated into a layer containing the fatty acid ester and a layer containing the by-product glycerol by using a method that is well-known to a person skilled in the art, for example. After that, the layer containing the fatty acid ester may be further subjected to isolation and refining of the fatty acid ester by using a method that is well-known to a person skilled in the art, as necessary.

The fatty acid ester that is obtained in the above-described manner can be used as a biodiesel fuel or a constituent component thereof, for example.

### Reference Signs List

100, 100a, 100b, 100c, 100d, 100e, 100f Liquid dispersion device
109 Bottom
110 Treatment chamber
111 Inner wall
112 Treatment liquid inlet
114 Product outlet
115 Valve
116 Treatment liquid
116A Oil phase
116b Water phase
120, 120', 120a, 120'a, 120b, 1201), 120c, 120'c, 120d, 120'd, 120e, 120'e, 120f, 120'f Liquid flow member
121 Rotary shaft
122, 122', 122a, 122b, 122'b, 122c, 122'c, 122e, 122'e, 122f, 120'f Suction portion
123, 123', 123b, 123'b, 123c, 123'c, 123e, 123'e Ejection portion
124, 124', 124b, 1341), 124c, 124'c, 124d, 124'd, 124e, 124f, 124"f Suction port
125, 125', 125" Ejection port
128 Liquid surface
140 Motor
200, 300, 500a, 600, 700a, 700b, 700c, 700d, 700e, 700f Liquid dispersion apparatus
310, 400a, 400b Baffle plate
610 Jacket
612 Jacket inlet
614 Jacket outlet

## Claims

1. A liquid dispersion device comprising at least one liquid flow member attachable to a rotary shaft,
wherein the liquid flow member includes:
at least one tubular suction portion extending along the rotary shaft and including a suction port at a lower end thereof and
at least one ejection portion extending in a direction inclined with respect to the suction portion and having one end that is in communication with an upper end of the suction portion and another end that includes an ejection port.

2. The liquid dispersion device according to claim 1, wherein the suction portion of the liquid flow member is a straight tube extending substantially in parallel with an axial direction of the rotary shaft.

3. The liquid dispersion device according to claim 1 or 2, comprising a plurality of the suction portions, wherein the lower ends of all of the suction portions are located at the same position with respect to the rotary shaft.

4. The liquid dispersion device according to claim 1 or 2, comprising a plurality of the suction portions, wherein the lower end of one of the suction portions and the lower end of another suction portion of the suction portions are located at different positions with respect to the rotary shaft.

5. The liquid dispersion device according to claim 1 or 2, comprising a plurality of the ejection portions, wherein the other ends of all of the ejection portions are located at the same position with respect to the rotary shaft.

6. The liquid dispersion device according to claim 1 or 2, comprising a plurality of the ejection portions, wherein the other end of one of the ejection portions and the other end of another ejection portion of the ejection portions are located at different positions with respect to the rotary shaft.

7. The liquid dispersion device according to claim 1 or 2,
wherein the at least one suction portion is constituted by a single tube, and
the liquid dispersion device includes, as the at least one ejection portion, at least two ejection portions provided at the upper end of the suction portion.

8. Aliquid dispersion apparatus comprising:
a treatment chamber for containing a treatment liquid;
the liquid dispersion device according to any one of claims 1 to 7 provided in the treatment chamber; and
a rotary shaft to which the liquid dispersion device is attached.

9. The liquid dispersion apparatus according to claim 8, wherein the treatment liquid is constituted by an oil phase and a water phase.
